## Europäisches Patentamt
### European Patent Office
### Office européen des brevets

(19)

(11) Veröffentlichungsnummer: **0 096 284**
**A1**

(12) **EUROPÄISCHE PATENTANMELDUNG**

(21) Anmeldenummer: 83105097.6

(22) Anmeldetag: 24.05.83

(51) Int. Cl.$^3$: **C 09 C 1/00**

(30) Priorität: 04.06.82 DE 3221045

(43) Veröffentlichungstag der Anmeldung:
21.12.83 Patentblatt 83/51

(84) Benannte Vertragsstaaten:
BE CH DE FR GB IT LI NL

(71) Anmelder: Merck Patent Gesellschaft mit beschränkter Haftung
Frankfurter Strasse 250
D-6100 Darmstadt(DE)

(72) Erfinder: Ambrosius, Klaus, Dr.
Bergerstrasse 102
D-6000 Frankfurt/Main(DE)

(72) Erfinder: Esselborn, Reiner, Dr.
Küchlerstrasse 6
D-6100 Darmstadt(DE)

(54) Perlglanzpigmente, Verfahren zu ihrer Herstellung und ihrer Verwendung.

(57) Die Anmeldung betrifft Perlglanzpigmente auf der Basis von mit Metalloxiden beschichteten Glimmerschuppen mit verbessertem Glanz und verbesserter Farbkraft, dadurch gekennzeichnet, daß Glimmer mit einer Schicht aus Titandioxid und Zirkondioxid überzogen ist, wobei der Gehalt an Zirkondioxid in der Metalloxidschicht bei 1 bis 10 Gewichtsprozent, bezogen auf Titandioxid, liegt sowie ein Verfahren zur Herstellung dieser Pigmente.

EP 0 096 284 A1

Merck Patent Gesellschaft
mit beschränkter Haftung
6100 D a r m s t a d t

Perlglanzpigmente, Verfahren zu ihrer Herstellung und
ihrer Verwendung

Die Erfindung betrifft Perlglanzpigmente auf der Basis
von mit Metalloxiden beschichteten Glimmerschuppen mit
verbessertem Glanz und verbesserter Farbkraft.

Intensität und Reinheit der Interferenzfarbe dieser Pigmente hängt entscheidend von der Ausbildung der auf die
Glimmerschuppen aufgefällten Metalloxidschicht ab. Neben
einer homogenen Schichtdicke wird vor allem gefordert,
daß die Schicht rißfrei ausgebildet ist und eine möglichst
geringe Lichtstreuung aufweist. Es ist dabei bekannt, daß
sowohl Risse, die insbesondere bei dickeren Schichten
beim Glühen der Pigmente auftreten können, als auch insbesondere die Größe der auf den Glimmer aufgefällten Metalloxidkristalle eine entscheidende Rolle für das Ausmaß der Streuung spielen. Ebenfalls bekannt ist, daß die
Streuung in der Schicht im betrachteten Bereich umso
größer ist, je größer die Einzelkristalle des aufgefällten
Metalloxids ausgebildet sind. Das an den Streuzentren in
der Metalloxidschicht entstehende diffuse Licht mindert
zum einen die Intensität im Glanzwinkel des reflektierten Lichtanteils und damit die Farbsättigung, zum anderen bewirkt es eine Verweißlichung der Interferenzfarbe. Bei zu großen Kristallen verschwindet der Perlglanz und die Interferenzfarbe vollkommen.

Die nach den bekannten Fällverfahren hergestellten Pigmente, bei denen insbesondere Titandioxid als homogene Schicht auf Glimmerschuppen aufgefällt ist, sind in Bezug auf Glanz- und Farbkraft noch nicht zufriedenstellend, so daß die Aufgabe bestand, in dieser Hinsicht verbesserte Pigmente zur Verfügung zu stellen.

Neben Titandioxid wurde auch für Zirkoniumdioxid schon als Beschichtungsmaterial verwendet, wobei die gleichen Probleme wie bei der Beschichtung mit Titandioxid bestehen. Insofern war auch nicht zu erwarten, daß Mischschichten von Titan- und Zirkondioxid, die verschiedentlich erwähnt wurden, zu besseren Ergebnissen führen würden. Pigmente mit Mischschichten aus Zirkondioxid und Titandioxid sind daher bis heute auch weder beschrieben noch im Markt angeboten worden.

Es wurde nun jedoch gefunden, daß überraschenderweise dann besonders vorteilhafte Pigmente entstehen, wenn Mischschichten aus Titandioxid und Zirkondioxid aufgefällt werden, die ein bestimmtes, eng begrenztes Verhältnis von Titan zu Zirkonium aufweisen.

Gegenstand der Erfindung sind daher Perlglanzpigmente auf der Basis von mit Metalloxiden beschichteten Glimmerschuppen mit verbessertem Glanz und verbesserter Farbkraft, die dadurch gekennzeichnet sind, daß Glimmer mit einer Schicht aus Titandioxid und Zirkondioxid überzogen ist, wobei der Gehalt an Zirkondioxid in der Metalloxidschicht bei 1 bis 10 Gewichtsprozent, bezogen auf
Titandioxid, liegt.

Gegenstand der Erfindung ist auch ein Verfahren zur Herstellung von Perlglanzpigmenten auf der Basis von mit
Metalloxiden beschichteten Glimmerschuppen, wobei Glimmer
in wäßriger Suspension bei weitgehend konstantem pH-Wert
mit der Lösung eines oder mehrerer Metallsalze versetzt
und danach gewaschen, getrocknet und geglüht wird, das
dadurch gekennzeichnet ist, daß in der Metallsalzlösung
das Verhältnis von Titan zu Zirkonium etwa 15 : 1 bis
150 : 1 beträgt.

Schließlich ist Gegenstand der Erfindung auch die Verwendung der verbesserten Pigmente bei der Pigmentierung von
Farben, Lacke und Körperpflegemitteln.

Hauptvorteil der neuen Pigmente ist der verbesserte Glanz
und die reineren Interferenzfarben. Insbesondere zeigen
sich die Vorteile der neuen Pigmente bei Pigmenten mit
relativ dicken Metalloxidschichten, da diese dicken
Schichten beim Glühen in besonderer Weise zur Rissebildung neigen.

Diese Vorteile zeigen sich auch dann, wenn in der Metalloxidschicht oder als separate Schicht weitere färbende
oder farblose Metallverbindungen enthalten sind. Dafür
kommen z.B. Aluminium, Zink, Antimon, Chrom,Eisen, Kobalt
und Nickel in Frage, die in Form der Oxide, Phosphate
oder Silikate vorliegen können. Diese Zusätze können
stabilisierenden oder dekorativen Zwecken dienen. Durch
Zusatz färbender Metallverbindungen werden besonders
brillante Kombinationspigmente erhalten, die neben der
Interferenzfarbe auch eine Pulverfarbe besitzen und so
interessante Changiereffekte ermöglichen.

Bei der Herstellung der erfindungsgemäßen Pigmente können die üblichen Verfahren Verwendung finden, wie z. B. das im DBP 2009566 beschriebene Verfahren. Dabei werden Glimmerschuppen, die in der Regel einen Durchmesser von etwa 5 bis 200 µm und eine Dicke von etwa 0,1 bis 5 µm besitzen, in einer wäßrigen Lösung suspendiert, die mit einer geeigneten Säure, wie z. B. Salzsäure oder Schwefelsäure, auf einen geeigneten pH-Wert etwa im Bereich 0,5 bis 5 gebracht wird. Für die gemeinschaftliche Fällung von Titandioxid und Zirkondioxid hat sich der pH-Bereich von 2,0 bis 3,0 als besonders vorteilhaft erwiesen. Zu dieser auf etwa 50 bis 100 °C, vorzugsweise etwa 70 bis 80 °C, erhitzten Suspension wird dann die Metallsalzlösung langsam zulaufen lassen, wobei durch gleichzeitige Zugabe einer Base der pH-Wert der Suspension weitgehend konstant gehalten wird. Als Metallsalze sind in diesem Verfahren an sich alle löslichen Titan- und Zirkonsalze geeignet, wie z. B. die Chloride und die Sulfate. Bevorzugt werden Titantetrachlorid und Zirkoniumoxichlorid verwendet. Falls der Metallsalzlösung weitere Metallkationen zugesetzt werden, erfolgt dies zweckmäßig ebenfalls in Form der Chloride oder Sulfate.

Erfindungsgemäß werden die Titan- und Zirkonsalze so gewählt, daß sich ein Molverhältnis von Titan zu Zirkonium von etwa 15 : 1 bis 150 : 1, insbesondere von etwa 30 : 1 bis etwa 60 : 1 ergibt. Die Titan- und Zirkonsalze können gemischt werden und als einheitliche Lösung oder aber in separaten Lösungen gleichzeitig der Glimmersuspension zugegeben werden. In jedem Fall werden die Lösungen so langsam zugegeben, daß die in der Glimmersuspension durch Hydrolyse entstehenden Hydroxide bzw. Oxidaquate sich jeweils vollständig auf der Glimmeroberfläche abscheiden, ohne daß wesentliche Mengen von frei in der Suspension beweglichen Nebenprodukten entstehen. Die dabei zur Anwendung kommenden Zulaufgeschwindigkeiten sind so gewählt, daß pro Minute und pro Quadratmeter zu belegender Oberfläche etwa 0,01 bis 20 x $10^{-5}$ Mol an auszufällenden Salzen zugeführt wird. Je nach der gewünschten Dicke der Beschichtung werden dabei Beschichtungszeiten von mehreren Stunden bis zu mehreren Tagen benötigt.

Nach Erreichen der gewünschten Schichtdicke bzw. der gewünschten Interferenzfarbe wird die Beschichtung beendet und die Pigmente werden analog den üblichen Verfahren abgetrennt, gewaschen, getrocknet und geglüht. Zum Glühen werden Temperaturen von etwa 500 bis 1000 °C, insbesondere von 700 bis 900 °C, angewendet, wobei die gefällten Metallhydroxide bzw. Oxidaquate entwässert werden und in die entsprechende Oxide übergehen. In der Metalloxidschicht liegen Titan und Zirkonium in oxidischer Form in homogener Verteilung nebeneinander vor. Das Zirkoniumdioxid bildet dabei einen Anteil von etwa 1 bis 10 Gewichtsprozent, vorzugsweise von etwa 2,5 bis 5 Gewichtsprozent, bezogen auf Titandioxid in der Metalloxidschicht.

Durch Variation der Dicke der Beschichtung können beliebige Interferenzfarben erster oder höherer Ordnung erreicht werden. Auch bei den dicken Schichten wie sie zur Herstellung von Pigmenten mit blauer oder grüner Interferenzfarbe benötigt werden, ist kaum eine Rißbildung, die zu einer Glanzverminderung führt, zu beobachten. Dies ist insbesondere auch bei relativ großen Glimmerteilchen von Vorteil, da bei diesen Teilchen eine besonders große Gefahr der Rissebildung beim Glühen besteht. Insgesamt zeigen die erfindungsgemäßen Pigmente eine höheren Glanz, weniger Streulicht und auf dunklem Untergrund eine größere Farbkraft. Diese Vorteile treten bei Pigmenten aller Teilchengröße auf. So lassen sich nach dem erfindungsgemäßen Verfahren auch mit sehr feinen Glimmersorten gute und farbkräftige Interferenzpigmente herstellen. Die erfindungsgemäßen Pigmente können wie die bisher
bekannten verwendet werden, also z. B. zur Pigmentierung
von Kunststoffen, Farben oder Lacken, aber insbesondere
auch in Körperpflegemitteln und Kosmetika. Durch weitere
Beschichtungen mit färbenden Zusätzen lassen sich so auch
besonders brillante Kombinationspigmente herstellen.

Beispiel 1

Eine Suspension von 60 g Kaliglimmer der Kornfraktion 10
bis 70 $\mu$m in 2 l Wasser, wird auf 75 $^{\circ}$C erhitzt und mit
Salzsäure auf einen pH-Wert von 2,6 eingestellt. Dazu werden langsam 900 ml einer salzsauren Lösung, die 150 g/l
$TiCl_4$ und 2,2 g/l $ZrOCl_2 . 8 H_2O$ enthält, gegeben, wobei
der pH-Wert durch gleichzeitige Zugabe von Natronlauge
konstant bei 2,6 gehalten wird. Danach wird das Pigment
abfiltriert, bei 120 $^{\circ}$C getrocknet und 45 Minuten bei
800 $^{\circ}$C geglüht. Man erhält ein blaues Pigment von hoher
Brillanz und Farbkraft.

Beispiel 2

Es wird analog Beispiel 1 gearbeitet, wobei die Metallsalzlösung jedoch 4,4 g $ZrOCl_2 . 8 H_2O$/l enthält. Man erhält
ein farbkräftiges, reinblaues Pigment.

Beispiel 3

Es wird analog Beispiel 1 gearbeitet, wobei jedoch 850 ml
einer Metallsalzlösung verwendet werden, die 150 g/l $TiCl_4$
und 8,4 g/l $ZrOCl_2 . 2 H_2O$ enthält. Man erhält ein sehr
farbkräftiges Blaupigment mit geringem Rotanteil.

Beispiel 4

Eine Suspension von 5 kg Kaliglimmer der Kornfraktion 10 bis 70 /um in 150 l Wasser wird auf 75 $^{\circ}$C erhitzt und mit Salzsäure auf einen pH-Wert von 2,6 eingestellt. Zur Suspension wird eine salzsaure Metallsalzlösung gegeben, die 200 g $TiCl_4$ und 7,8 g $ZrOCl_2 \cdot 8 H_2O/l$ enthält, wobei der pH-Wert durch gleichzeitige Zugabe von Natronlauge konstant bei 2,6 gehalten wird. Nach Erreichen der gewünschten Interferenzfarbe wird die Beschichtung abgebrochen, das Pigment abfiltriert, bei 120 $^{\circ}$C getrocknet und 45 Min. bei 800 $^{\circ}$C geglüht. Man erhält ein Pigment mit gutem Glanz und guter Farbkraft.

Merck Patent Gesellschaft
mit beschränkter Haftung
6100 D a r m s t a d t


Patentansprüche:

1.  Perlglanzpigmente auf der Basis von mit Metalloxiden beschichteten Glimmerschuppen mit verbessertem Glanz und verbesserter Farbkraft, dadurch gekennzeichnet, daß Glimmer mit einer Schicht aus Titandioxid und Zirkondioxid überzogen ist, wobei der Gehalt an Zirkondioxid in der Metalloxidschicht bei 1 bis 10 Gewichtsprozent, bezogen auf Titandioxid, liegt.

2.  Perlglanzpigment nach Anspruch 1, dadurch gekennzeichnet, daß der Gehalt an Zirkondioxid bei 2,5 bis 5 Gewichtsprozent liegt.

3.  Perlglanzpigmente nach Anspruch 1 oder 2, dadurch gekennzeichnet, daß in der Metalloxidschicht oder als separate Schicht weitere färbende oder farblose Metallverbindungen enthalten sind.

4.  Verfahren zur Herstellung von Perlglanzpigmenten auf der Basis von mit Metalloxiden beschichteten Glimmerschuppen, wobei Glimmer in wäßriger Suspension bei weitgehend konstantem pH-Wert mit der Lösung eines oder mehrerer Metallsalze versetzt und danach gewaschen, getrocknet und geglüht wird, dadurch gekennzeichnet, daß in der Metallsalzlösung das Molverhältnis von Titan zu Zirkonium etwa 15 : 1 bis 150 : 1 beträgt.

5.  Verfahren nach Anspruch 3, dadurch gekennzeichnet, daß bei der Beschichtung ein pH-Wert von etwa 2,0 bis 3,0 eingehalten wird.

6.  Verfahren nach Anspruch 3 oder 4, dadurch gekennzeichnet, daß bei der Beschichtung eine Temperatur von zwischen 50 und 100 $^{o}$C eingehalten wird.

7.  Verfahren nach einem der Ansprüche 4 bis 6, dadurch gekennzeichnet, daß in der Metallsalzlösung weitere färbende oder farblose Metallionen enthalten sind.

8.  Verfahren nach einem der Ansprüche 4 bis 7, dadurch gekennzeichnet, daß nach der Zugabe der Titan und Zirkonium enthaltenden Metallsalzlösung noch eine an sich bekannte Nachbeschichtung durchgeführt wird.

9.  Verwendung der Pigmente nach Anspruch 1 bei der Pigmentierung von Kunststoffen, Farben, Lacken und Körperpflegemitteln.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-2 072 300 (MERCK PATENT) <br><br> * Seite 2, Zeile 29 - Seite 4, Zeile 3; Seite 24, Zeilen 27-34 * <br><br> --- | 1,3,5, 6,8 | C 09 C 1/00 |
| X,Y | DE-A-2 313 331 (MERCK PATENT) <br> * Seite 24, Zeilen 2-6; Seite 32, Ansprüche 1,7; Seite 33, Anspruch 8 * <br><br> --- | 1,3,9 | |
| A | FR-A-2 198 984 (MERCK PATENT) <br><br> ----- | | |

| | | | RECHERCHIERTE SACHGEBIETE (Int. Cl. ³) |
|---|---|---|---|
| | | | C 09 C 1/00 |

Der vorliegende Recherchenbericht wurde für alle Patentansprüche erstellt.

| Recherchenort <br> DEN HAAG | Abschlußdatum der Recherche <br> 04-07-1983 | Prüfer <br> VAN BELLINGEN I. |
|---|---|---|